# EUROPÄISCHE PATENTSCHRIFT

(11) **EP 0 868 500 B1**
(45) Veröffentlichungstag und Bekanntmachung des Hinweises auf die Patenterteilung: **08.08.2001**
(21) Anmeldenummer: 96943950.4
(22) Anmeldetag: 13.12.1996
(51) Int. Cl.: C09K 17/20, C09K 17/22

(54) **VERBESSERTES VERFAHREN ZUR INTENSIVIERUNG DER OBERFLÄCHENVERFESTIGUNG EROSIONSGEFÄHRDETEN ERDREICHS**
IMPROVED METHOD OF BOOSTING SURFACE CONSOLIDATION OF SOIL THREATENED BY EROSION
PROCEDE AMELIORE POUR UNE CONSOLIDATION INTENSIFIEE DE LA COUCHE SUPERFICIELLE DE SOLS MENACES PAR L'EROSION

(30) Priorität: 22.12.1995 DE 19548314
(43) Veröffentlichungstag der Anmeldung: 07.10.1998
(73) Patentinhaber: Cognis Deutschland GmbH, 40589 Düsseldorf (DE)
(72) Erfinder: VON TAPAVICZA, Stefan, D-40699 Erkrath (DE); MÜLLER, Heinz, D-40789 Monheim (DE); HEROLD, Claus-Peter, D-40822 Mettman (DE); BÖTTCHER, Heinz, D-40699 Erkrath (DE); BURBACH, Frank, D-47877 Willich (DE)
(86) Internationale Anmeldenummer: EP9605602
(87) Internationale Veröffentlichungsnummer: WO9723579

(56) Entgegenhaltungen:
- WO-A-96/05268
- DE-A- 4 324 474
- DE-A- 4 428 269
- US-A- 3 887 506

## Beschreibung

Die erfindungsgemäße Lehre betrifft eine Verbesserung und Erweiterung der in der DE-A1-43 24 474 und der in der weiterführenden älteren deutschen Patentanmeldung P 44 28 269.9 geschilderten Lehre zur Oberflächenverfestigung von Sand und/oder Erdreich - im nachfolgenden auch als Erdreich bezeichnet. Beschrieben sind in diesen Druckschriften Modifikationen des an sich bekannten Verfahrens, durch Auftrag und Eintrag ausgewählter wäßriger Polymerzubereitungen auf beziehungsweise in die Oberfläche erosionsgefährdeter Erdreichschichten eine wenigstens temporäre Verfestigung auszubilden. Das Wasser des eingetragenen Imprägniermittels trocknet in vergleichsweise kurzer Zeit auf, die zurückbleibende Polymerphase verfestigt die Korn- und/oder Schluff-Struktur des imprägnierten Erdreichs, ohne dabei die Wasserdurchlässigkeit dieser Schichten in unzumutbarer Weise zu beeinträchtigen. Eine solche Oberflächenverfestigung beschränkt sich nicht auf Erdreich im engeren Sinne. Auch die entsprechende Stabilisierung anderer Oberflächenbereiche, die beispielsweise gegen Winderosion geschützt werden müssen, fällt in die Lehre des erfindungsgemäßen Handelns. Als Beispiele seien hier benannt: Deponien und/oder Abraumhalden mit oder ohne Auftrag einer Abdeckung durch Mutterboden oder andere Schutzschichten. Erosionsgefährdet sind aber beispielsweise auch grasbewachsene Erdreichflächen, die stärkeren mechanischen und/oder klimatischen Einwirkungen ausgesetzt sind. Als Beispiele seien entsprechende Sportflächen wie Golfplätze mit ihren hoch beanspruchten Zentralbereichen, Felder für Ballspiele wie Fußball, Handball und dergleichen, benannt. Hier bilden sich häufig die bekannten Trockenstellen aus, die dann verstärkt den Witterungseinflüssen ausgesetzt sind. Andere Auslöser für entsprechende Fehlstellen sind beispielsweise nasse, stark verdichtete Bodenbereiche oder die Ausbildung von sogenanntem Rasenfilz, der den Durchtritt aufgebrachter Nässe an die Wurzelschicht behindert und damit zur Ausbildung unterernährter Trockenbereiche führt, die dann wieder Ansatzpunkte der weiterführenden Erosion sind.

Entwicklung und Praxis beschäftigen sich seit Jahrzehnten mit der auch der Erfindung zugrundeliegenden Konzeption, partikuläre Feststoffe miteinander verklebende synthetische Kunststoffe in Form ihrer wäßrigen Dispersionen beziehungsweise Emulsionen auf die zu verfestigenden Flächen aufzutragen und dort so aufzutrocknen, daß hinreichende Wasserdurchlässigkeit des verfestigten Gutes gewährleistet ist. Besondere praktische Bedeutung kommt in diesem Zusammenhang wäßrigen Polyvinylacetat-Dispersionen zu - im nachfolgenden auch als PVAc-Dispersionen bezeichnet. Beispielhaft sei auf die folgenden Veröffentlichungen verwiesen: A. Kullmann et al. in Arch. Acker-Pflanzenbau Bodenkd., 22(11), 713-19. Neben Polyvinylacetat werden als brauchbare Binder beschrieben: Butadien-Styrol-Latex, ein Harnstoff/Formaldehyd-Polymer und eine Bitumenemulsion. Die Stabilisierung von Dünensand in entsprechender Weise gegen Regenbewitterung ist Gegenstand der Veröffentlichung D. Gabriels et al. (Univ. Ghent, Belgien) in Soil Sci., 118(5), 332-8. Auch hier ist ein Bindersystem auf Polyvinylacetat-Basis unter den bevorzugten Arbeitsmitteln angegeben. Aus den weiteren weltweit durchgeführten Arbeiten sei lediglich beispielhaft auf einige Patentschriften verwiesen, siehe in diesem Zusammenhang US 4,072,020, US 3,887,506, HU 11 654 sowie ZA 7501787.

Der Anforderungs- beziehungsweise Aufgabenkatalog für eine solche Verfestigung der Erdreichoberfläche kann außerordentlich vielgestaltig sein. Ohne Anspruch auf Vollständigkeit sei eine Reihe der in der Praxis geforderten Eigenschaften aufgezählt: Das Material sollte widerstandsfähig wenigstens gegen Fußgängerverkehr sein, es darf durch die jeweils vorliegenden Temperaturen, die Luftfeuchtigkeit und den Regen - für den jeweils beabsichtigten Zeitraum - nicht beeinträchtigt werden, es muß auch gegenüber hohen Windgeschwindigkeiten widerstandsfähig sein. Das aufzutragende Material sollte nicht entflammbar sein und bei Lagerung sowie während und nach der Anwendung keine Feuergefahr oder Explosionsgefahr darstellen. Bei Transport und Verarbeitung sollten möglichst keine außergewöhnlichen Schutzmaßnahmen getroffen oder Schutzkleidung getragen werden müssen. Die ausgehärtete Kunststoffimprägnierung sollte auf keimende Pflanzen, auf wachsende Pflanzen und auf Tiere keine giftige Wirkung ausüben und dabei möglichst farblos oder transparent sein. Unter Berücksichtigung dieser und weiterer Anforderungen kann zum heutigen Wissensstand zusammengefaßt werden:
1. PVAc-Homopolymer-Dispersionen sind grundsätzlich als Bindemittel geeignet. Ohne Mitverwendung von Weichmachern ergeben sie allerdings einen derart spröden Zusammenhalt der imprägnierten Schichten des Erdreichs, daß wesentliche Gebrauchsanforderungen nicht erfüllt werden.
2. Durch Zusatz von unter Normalbedingungen fließfähigen Weichmachern kann der Mangel zu (1) aufgefangen werden. In der Praxis bewährt hat sich als Weichmacher insbesondere das Di-butylphtalat. Damit weichgemachte PVAc-Homopolymerisate ergeben einen festen Zusammenhalt, dieser Weichmacher ist allerdings nicht abbaubar. Demgegenüber offenbart die DE 43 24 474 abbaubare Weichmacher.
3. Innerlich weichgemachte Polymer-Dispersionen (Poly-vinylacetat-co-Di--butylmaleinat) ergeben einen festen Zusammenhalt, sind aber ebenfalls nicht abbaubar.

Die Lehre der eingangs zitierten DE-A1-43 24 474 geht von der Aufgabe aus, PVAc-Homopolymer-Dispersionen für den beschriebenen Einsatzzweck mit Weichmachern auszurüsten, die einerseits das vielgestaltige technische Anforderungsprofil erfüllen, zum anderen aber darüber hinaus bioverträglich sind und insbesondere ihrerseits abgebaut werden können. Zugrunde liegt hier das Fachwissen, daß PVAc-Homopolymere grundsätzlich bioverträglich und abbaubar sind, wenn auch der Abbau dieses Polymeren vergleichsweise langsam vor sich geht. Zur einschlägigen Literatur siehe beispielsweise H. Kastien et al. "Der quantitative mikrobiologische Abbau von Lackkunstharzen und Polymerdispersionen", farbe + lack, 98. Jahrgang, 7/1992, 505-8. Gemäß der Lehre der genannten Veröffentlichung werden als biologisch akzeptable Weichmacher für PVAc-Dispersionen die folgenden ausgewählten Stoffklassen eingesetzt: Triester des Glycerins mit niederen aliphatischen Monocarbonsäuren, Citronensäuretriester mit niederen aliphatischen monofunktionellen Alkoholen und/oder epoxidierte Triglyceride wenigstens anteilsweise olefinisch ungesättigter Fettsäuren.

Gegenstand der eingangs ebenfalls zitierten älteren deutschen Patentanmeldung gemäß P 44 28 269.9 ist eine Verbesserung der Lehre der zuvor genannten Druckschrift. Diese Verbesserung berücksichtigt die Tatsache, daß die mit Estern auf Polyvinylalkohol-Basis verfestigten Erdreichoberflächen bei feuchten Untergründen/Böden oder bei intensivem Feuchtigkeitskontakt, zum Beispiel durch starken Regen, stark aufweichen können. Die Verfestigung kehrt zwar in der Regel nach erneutem Trocknen wieder zurück und verschwindet damit nicht vollständig, gleichwohl liegt hier für die praktische Anwendung eine Schwäche. Gegenstand der zitierten älteren Anmeldung ist dementsprechend in ihrem Kern die Verwendung von bei Raumtemperatur festen und/oder bei Luftzutritt aushärtenden Fettsäuren, Fettalkoholen und/oder ihren wenigstens weitgehend wasserunlöslichen Estern, Ethern und/oder Salzen als abbaubare und biologisch verträgliche Stabilisatoren zur Erhöhung der Wasserfestigkeit von Erdreichimprägnierungen auf Basis von Polyvinylacetat und vergleichbaren Estern des Polyvinylalkohols mit niederen Monocarbonsäuren. Die Offenbarung dieser älteren Anmeldung wird auch zum Gegenstand der vorliegenden Erfindungsoffenbarung gemacht, wobei im nachfolgenden auf die wesentlichen, jetzt auch im Rahmen der neuen technischen Lehre einzusetzenden Parameter im einzelnen noch eingegangen wird.

Die erfindungsgemäße Lehre will eine weiterführende Verbesserung des hier dargestellten Bereiches der Oberflächenimprägnierung und Verfestigung erosionsgefährdeter Erdreichschichten ermöglichen. Zielvorstellung ist dabei insbesondere die Möglichkeit zu schaffen, Einfluß auf die einstellbare Eindringgeschwindigkeit und gegebenenfalls Eindringtiefe der die polymeren Bindemittel enthaltenden wäßrigen Zubereitungen in den Oberflächenbereich des zu verfestigenden Erdreichs zu nehmen. Die erfindungsgemäße Lehre will insbesondere die Möglichkeit schaffen, ein hinreichend rasches und damit auch in Problembereichen - beispielsweise in Hanglagen, bei stärker verdichteten Böden oder beim Vorliegen von Rasenfilz und vergleichbaren Hemmschichten - hinreichend tiefes Eindringen der die Erdreichoberfläche verfestigenden Bindermasse in das Erdreich sicherzustellen. Gleichzeitig damit soll die Möglichkeit geschaffen werden, verbesserte Verfestigungseffekte - gegebenenfalls auch unter gleichzeitiger Einschränkung der insgesamt einzusetzenden Bindermasse - zu ermöglichen.

Die erfindungsgemäße Lehre geht dabei von einer Konzeption aus, die ansatzweise schon im Rahmen der älteren deutschen Patentanmeldung P 44 28 269.9 angesprochen ist. Geschildert wird dort die Möglichkeit, in den wäßrigen Zubereitungen des Bindemittels (Imprägniermittels) und/oder der Stabilisatoren geringe Mengen ausgewählter Komponenten mit Netzmittelcharakter mitzuverwenden. Als besonders geeignet sind dabei dort oberflächenaktive Komponenten vom O/W-Typ geschildert, die sich in der bevorzugten Ausführungsform ihrerseits auch durch biologische Verträglichkeit und insbesondere biologische Abbaubarkeit auszeichnen. Als ein wichtiges Beispiel ist in diesem Zusammenhang die Tensidklasse auf Basis von Alkylpolyglykosiden (APG) genannt.

Die im nachfolgenden geschilderte technische Lehre der neuen Entwicklung geht von der Erkenntnis aus, daß die in ganz bestimmter Weise gesteuerte Mitverwendung solcher und weiterer oberflächenaktiver Netzmittel zu einer Optimierung der angestrebten Bodenverfestigung in mehrfacher Weise führen kann.

### Gegenstand der Erfindung

Kern der erfindungsgemäßen Lehre ist dementsprechend das Verfahren zur Intensivierung der Oberfiächenverfestigung erosionsgefährdeten Erdreichs durch Eintrag wasserbasierter und haftvermittelnder Imprägniermassen auf Basis von Estem des Polyvinylalkohols mit C₁₋₅-Monocarbonsäuren und deren Gemischen mit höheren Monocarbonsäuren - im nachfolgenden der Einfachheit halber auch als "Binder" bezeichnet - gewünschtenfalls unter Mitverwendung von bei Luftzutritt aushärtenden Komponenten zur Erhöhung der Wasserfestigkeit der Imprägniermasse - im nachfolgenden der Einfachheit halber auch als "Stabilisator" bezeichnet.

Das erfindungsgemäße Verfahren ist dadurch gekennzeichnet, daß man die Erdreichimprägnierung mehrstufig ausbildet und dabei wenigstens in der 1.Imprägnierstufe eine wäßrige Zubereitung einsetzt, die biologisch verträgliche Netzmittel zur Beschleunigung und/oder Intensivierung der Erdreichbenetzung mit wäßriger Phase enthält und dabei wenigstens in der ersten Imprägnierstufe eine wässrige Zubereitung einsetzt, die biologisch verträgliche Netzmittel zur Beschleunigung und/oder Intensiverung der Erdreichbenetzung mit wässriger Phase und gewünschtenfalls Anteile des Bindemittels enthält, und in wenigstens einer weiteren Arbeitsstufe die Hauptmenge des Bindemittels und gewünschtenfalls zusätzlich Stabilisator einträgt.

In der wichtigsten Ausführungsform der erfindungsgemäßen Lehre wird in dieser 1.Imprägnierstufe des zu verfestigenden Erdreichs eine wäßrige Behandlungslösung eingesetzt, die zusammen mit den Netzmitteln Anteile des insgesamt in das Erdreich aufzubringenden Binders und/oder Stabilisators enthält. In bevorzugten Ausführungsformen ist der hier in dieser Arbeitsstufe eingetragene Binderanteil jedoch vergleichsweise beschränkt und liegt bei weniger als 50 Gew.-% und insbesondere bei weniger als 20 Gew.-% der insgesamt in die Erdreichoberflächen einzutragenden Bindermenge. In einer ebenfalls sehr wichtigen Ausführungsform der Erfindung wird allerdings in einer ersten Stufe eine wäßrige Lösung der Netzmittel ohne gleichzeitige Mitverwendung von Binder und/oder Stabilisator eingesetzt und damit der zu behandelnde Bodenbereich intensiv vorgefeuchtet.

### Einzelheiten zur erfindungsgemäßen Lehre

Ausgangspunkt der im nachfolgenden beschriebenen Modifikation der Erdreichverfestigung im Sinne der zuvor zitierten Schutzrechte der Anmelderin ist die Erkenntnis, daß eine in ganz bestimmter Weise gesteuerte Mitverwendung der Hilfsstoffe auf Netzmittelbasis letztlich das Eindringen der wäßrigen Bindemittelzubereitung in das zu verfestigende Erdreich substantiell begünstigt. Entsprechendes gilt für die Einarbeitung gegebenenfalls mitverwendeter wäßriger Zubereitungen der Stabilisatoren. Im einzelnen liegt der folgende Sachverhalt zugrunde:

Netzmittel der geschilderten Art wirken sich dann besonders als Arbeitshilfe zum intensivierten Feuchtigkeits- und Guteintrag in die Erdreichoberfläche aus, wenn sie im Rahmen einer ersten Arbeitsstufe - gewissermaßen zur Vorimprägnierung des zu verfestigenden Erdreich-Bereiches - eingesetzt werden. Dabei ist dieser Effekt in keineswegs naheliegender Weise besonders ausgeprägt, wenn in einer solchen ersten Behandlungsstufe die Netzmittel in einer wäßrigen Zubereitung zum Einsatz kommen, die zusätzlich auch schon beschränkte Mengen des nachfolgend zur Erdreichverfestigung einzusetzenden Bindemittels und/oder Stabilisators enthalten kann. Durch einen solchen Eintrag der Netzmittel, insbesondere zusammen mit beschränkten Mengen des insgesamt einzutragenden Bindemittelanteiles findet offenbar eine synergistische Wirkungsbeeinflussung der hier in der ersten Verfahrensstufe gemeinsam eingesetzten Wertstoffkomponenten, als auch eine entsprechende Beeinflussung des nachfolgenden Eintrags der Hauptmasse des Bindemittels statt. Untersuchungen der Anmelderin haben gezeigt, daß auf diese Weise nicht nur raschere und gegebenenfalls tiefergreifende Imprägnierungen der Erdreichoberfläche einstellbar sind, es können zusätzlich gegebenenfalls beträchtliche Mengen an Bindemittel eingespart und gleichwohl gute Verfestigungswerte in der Erdreichoberfläche eingestellt werden.

Besonders interessante Effekte können insbesondere dann erhalten werden, wenn in dieser ersten Stufe der Vorimprägnierung stark verdünnte wäßrige Binderzubereitungen mit dem zusätzlichen Gehalt an Netzmitteln zum Einsatz kommen. So ist es erfindungsgemäß bevorzugt, in dieser ersten Arbeitsstufe mit wäßrigen Imprägnierlösungen zu arbeiten, deren Bindergehalt unter 5 Gew.-% liegt und beispielsweise maximal 2 bis 3 Gew.-% beträgt. Besonders ausgeprägte Effekte können hier beim Einsatz von wäßrigen Zubereitungen mit einem Bindergehalt im Bereich von wenigstens etwa 0,1 bis 0,3 Gew.-% und bis maximal etwa 2 Gew.-% eingestellt werden. In der Regel hat sich das Arbeiten in dieser vorbereitenden Stufe mit Bindergehalten in der wäßrigen Behandlungslösung im Bereich von etwa 0,5 bis 1,5 Gew.-% besonders bewährt.

Die in dieser Arbeitsstufe vorab oder gleichzeitig eingetragenen Netzmittel können schon in geringsten Mengen substantielle Wirkung entfalten, wie es für die Praxis des Arbeitens mit Netzmitteln grundsätzlich bekannt ist. Als brauchbar haben sich insbesondere Netzmittelmengen erwiesen, die in dem Bereich bis etwa eine Größenordnung unterhalb des im jeweiligen Fall in dieser Vorstufe eingesetzten Bindergehalts in der wäßrigen Behandlungsflüssigkeit liegen. So haben sich für den Einsatz in der ersten Imprägnierstufe wäßrige Flüssigphasen als geeignet erwiesen, deren Gehalt an biologisch verträglichen Netzmitteln beziehungsweise Netzhilfen höchstens etwa 1 Gew.-%, vorzugsweise höchstens etwa 0,5 Gew.-% beträgt. Im allgemeinen werden Netzhilfen in Mengen von maximal etwa 0,1 bis 0,2 Gew.-% eingesetzt werden - Gew.-% hier jeweils bezogen auf die wäßrige Phase dieser ersten Imprägnierstufe. In Abhängigkeit von der Intensität der Netzwirkung können hier auch deutlich geringere Mengen schon wirkungsvolle Effekte aufweisen, beispielsweise also Netzmittelgehalte im Bereich von 0,005 bis 0,1 Gew.-% - Gew.-% wie zuvor angegeben bestimmt.

Als geeignete Netzmittel beziehungsweise Netzhilfen erschließt sich ein großer Bereich der hier in der Fachwelt bekannten Komponenten. Oberflächenaktive Hilfsstoffe dieser Art kennzeichnen sich bekanntlich durch die Kombination von hydrophilen und oleophilen Molekülbestandteilen, wobei im jeweils konkreten Fall die entsprechenden netzaktiven Komponenten dann durch ihre HLB-Werte (hydrophilic-lipophilic-Balance) gekennzeichnet sind. Geeignete Netzmittel für die Netzung von Feststoffoberflächen mit wäßriger Phase fallen insbesondere in den Bereich entsprechender Hilfsstoffe für die Herstellung von O/W-Emulsionen und damit in HLB-Bereiche von wenigstens etwa 7 oder 8 bis etwa 18. Entsprechende Netzhilfen mit HLB-Werten des Bereiches von etwa 10 bis 18 und insbesondere etwa 12 bis 18 können besonders geeignet sein.

Bevorzugte Netzhilfen für das Arbeiten im erfindungsgemäßen Sinne zeichnen sich durch hohe ökologische Verträglichkeit und insbesondere durch biologische Abbaubarkeit aus. Die einschlägige Technologie kennt hier insbesondere Hilfsmittel dieser Art, die wenigstens anteilsweise Naturstoff-basiert sind und beispielsweise dem Bereich entsprechender Ester, Partialester und deren Derivate, insbesondere der entsprechenden Poly- beziehungsweise Oligo-Ethoxylate zugehörig sind. Auch Acetale - beispielsweise die bekannten Alkyl(poly)glykosid-Verbindungen, die in der Fachsprache auch als "APG-Verbindungen" bezeichnet werden - sind hier wichtige Vertreter. Grundsätzlich kann auf das heute weit entwickelte Wissen der Fachwelt zu solchen ökologisch verträglichen und insbesondere durch natürliche Abbauprozesse abbaubaren Hilfsstoffen mit Netz- beziehungsweise Tensidwirkung verwiesen werden. Lediglich beispielhaft seien einige der wichtigsten Stoffklassen hier aufgezählt: Geeignete Naturstoff-basierte Ester und sich davon ableitende modifizierte Netzmittel sind beispielsweise Sorbitanester und Sorbitanester-Ethoxylate, Oligoglycerin-Partialester wie Di- oder Triglycerin-Partialester können ebenso wertvolle Hilfsstoffe sein, wie Rhizinusethoxylate mit Tensidcharakter, beispielsweise Verbindungen entsprechender Art mit 20, 30 oder 40 EO-Gruppen im jeweiligen Molekül. Wichtige Vertreter für die erfindungsgemäße Lehre finden sich insbesondere auch im Gebiet der für den Einsatz in Lebensmitteln geeigneten Emulgatoren, beispielsweise Zuckerester, Ester der Milchsäure und/oder der Weinsäure.

Besondere Bedeutung kann in diesem Zusammenhang grundsätzlich nichtionischen Netzmitteln zukommen, die in ihrem Molekül oleophile Bestandteile mit hydrophilen Molekülbestandteilen verbinden und dabei Netzmittel vom O/W-Typ bilden. Besonders geeignete Vertreter der hier angesprochenen Netzmittelklassen sind neben den zuvor erwähnten Verbindungen die bereits erwähnten APG-Verbindungen und Fettalkohol(poly)alkoxylate. Zum Einsatz im erfindungsgemäßen Sinne eigenen sich dabei insbesondere auch Abmischungen einer Mehrzahl geeigneter Vertreter der hier angesprochenen Tensidklassen, insbesondere also Abmischungen von APG- und Fettalkohol(poly)alkoxylat-Verbindungen. Geeignete Vertreter der zuletzt genannten Stoffklasse sind insbesondere Fettalkoholethoxylate die sich von Fettalkoholen mit 10 bis 20 C-Atomen und insbesondere 12 bis 18 C-Atomen im Molekül einerseits und wenigstens 10 und vorzugsweise wenigstens 20 EO-Einheiten im Netzmittelmolekül charakterisieren. Besonders interessante Vertreter können hier beispielsweise C₁₂₋₁₈-Fettalkoholethoxylate mit 30 oder 40 EO-Einheiten im jeweiligen Molekül sein. Besonders geeignete Netzmittel sind die schon mehrfach erwähnten Alkyl(poly)glykosid-Verbindungen (APG), die bei der Umsetzung von monofunktionellen Alkoholen mit insbesondere 6 bis 20, bevorzugt 8 bis 18 C-Atomen mit (Poly)glykosiden, insbesondere Stärke bzw. Glukose und/oder Oligoglykosiden gebildet werden. C_{8/10}-APG-Verbindungen mit einem durchschnittlichen Polymerisationsgrad (DP) ≤ 5, insbesondere einem DP von 1 bis 2, können besonders geeignete Netzmittel im erfindunsgemäßen Sinne sein.

Das Arbeiten im Sinne der erfindungsgemäßen Lehre wird dann beispielsweise wie folgt verwirklicht: Die zu verfestigende Erdreichfläche wird in einer ersten Arbeitsstufe mit einer wäßrigen Zubereitung von Netzmittel und gewünschtenfalls Bindemittel - Bindemittelgehalt beispielsweise bei etwa 1 Gew.-% und Netzmittelgehalt bis zu 0,1 Gew.-% - bewässert. Die jeweils einzusetzende Flüssigkeitsmenge wird hier durch eine Reihe von Parametern bestimmt, in erster Linie ist hier die Beschaffenheit des Bodens und seine Aufnahmebereitschaft gegenüber der wäßrigen Phase zu berücksichtigen, zum anderen wird das Ausmaß der gewünschten Tiefenimprägnierung mit zu berücksichtigen sein. In das so vorbehandelte Erdreich wird dann in wenigstens einer weiteren Arbeitsstufe die Hauptmenge des Bindemittels und gewünschtenfalls zusätzlich Stabilisator eingetragen. Vorzugsweise wird dabei diese zweite Stufe der Bodenimprägnierung derart kurzzeitig an die Vorimprägnierung angeschlossen, daß der Eintrag der Hauptmenge des Binders in das aus der Vorbehandlung noch feuchte beziehungsweise nasse Erdreich erfolgt.

Erfindungsgemäß ist es weiterhin bevorzugt, im Sinne der Lehre der DE 43 24 474 zusammen mit den Bindern auf Basis der geschilderten Polyvinylalkohol-Ester Weichmacher einzusetzen, die bevorzugt biologisch abbaubar sind und insbesondere wenigstens anteilsweise den folgenden Gruppen zugeordnet sind: Triester des Glycerins mit niederen aliphatischen Monocarbonsäuren, Citronensäuretriester mit niederen aliphatischen monofunktionellen Alkoholen und/oder epoxidierte Triglyceride wenigstens anteilsweise olefinisch ungesättigter Fettsäuren. Diese Weichmacher werden dabei im Sinne der Lehre der zitierten Druckschrift den wäßrigen Dispersionen der jeweils ausgewählten Polyvinylalkohol-Ester und insbesondere den entsprechenden wäßrigen Polyvinylacetatdispersionen in Mengen von etwa 1 bis 15 Gew.-% und vorzugsweise von etwa 3 bis 10 Gew.-% - Gew.-% jeweils bezogen auf eine ca. 50 Gew.-%ige wäßrige Polyvinylacetat-Dispersion - zugesetzt. Weichmacher kann dabei auch schon in der erfindungsgemäß vorgesehenen ersten Vorbehandlungsstufe zusammen mit dem hier eingesetzten geringen Polymeranteil mitverwendet werden. Weiterführende Arbeitsanweisungen, insbesondere für die Beschaffenheit der als Binder eingesetzten Polymerverbindung(en), sind der genannten Druckschrift zu entnehmen. So eignen sich hier insbesondere mit biologisch abbaubaren Schutzkolloiden stabilisierte wäßrige Polyvinylacetat-Dispersionen. Geeignete Schutzkolloide sind insbesondere Polyvinylalkohol und/oder Stärke und/oder wasserlösliche Stärkederivate. Deren Einsatzmengen sind vorzugsweise aber derart eingeschränkt, daß die hinreichende Festigkeit des Polyvinylacetat-Überzuges auf dem Boden gegen Bewitterungseinflüsse erhalten bleibt. Geeignet sind beispielsweise Mengen dieser biologisch abbaubaren Schutzkolloide bis etwa 5 Gew.-% und vorzugsweise Mengen von etwa 0,5 bis 3 Gew.-%-Gew.-% hier bezogen aufPolyvinylacetat-Feststoff.

Besonders wichtige Weichmacher sind Glycerintriester von aliphatischen Monocarbonsäuren mit 2 bis 6 und insbesondere 2 bis 4 C-Atomen im Molekül, wobei dem Triacetin besondere Bedeutung zukommt. Geeignet sind weiterhin Citronensäuretriester mit aliphatischen monofunktionellen Alkoholen mit 2 bis 6 C-Atomen, vorzugsweise mit 2 bis 4 C-Atomen. Geeignet sind dabei insbesondere entsprechende Citronensäureester mit freier Hydroxylgruppe der Citronensäure, ebenso aber auch an dieser Stelle des Moleküls derivatisierte Abkömmlinge, insbesondere mit Acylresten versehene entsprechende Citronensäureester. Geeignete Acylreste sind hier beispielsweise Reste von insbesondere gesättigten Carbonsäuren mit 2 bis 10 C-Atomen, aber auch Reste entsprechender Säuren mit noch höherer Kohlenstoffzahl. Weitere besonders geeignete Weichmacher finden sich in den Klassen epoxidierter Öle natürlichen Ursprungs, insbesondere epoxidiertes Rüböl und/oder expoxidiertes Sojaöl. Zur Lehre der Mitverwendung von Stabilisatoren im Bindemittel beziehungsweise Bindemittelgemisch wird auf die Lehre der älteren Anmeldung gemäß DE 44 28 269 verwiesen. Zum Zwecke der Erfindungsoffenbarung sei hier lediglich kurz zusammengefaßt:

Die als Stabilisatoren geeigneten zusätzlichen Komponenten sind bevorzugt biologisch verträgliche und durch natürliche Abbauprozesse abbaubare Hilfsstoffe, die aufgrund ihrer wenigstens überwiegenden oleophilen Molekülstruktur die Wasserfestigkeit der Imprägniermasse - des Binders - auch unter Extrembedingungen deutlich erhöhen können. Gleichwohl sind diese Hilfsmittel bevorzugt natürlichen Abbauprozessen zugänglich. Ihre Molekülstruktur zeichnet sich neben dem überwiegenden oleophilen Rest durch das Vorliegen von funktionellen Gruppen aus - Hydroxylgruppen, Carboxylgruppen, Ether- und/oder Estergruppierungen - die als Ansatzpunkte für den erleichterten mikrobiologischen Abbau solcher Stoffe beziehungsweise Stoffklassen bekannt sind.

Geeignet sind hier insbesondere Fettsäuren und Fettalkohole, die Kohlenwasserstoffketten im Molekül mit wenigstens 6, vorzugsweise mit wenigstens 8 bis 10 C-Atomen, aufweisen. Die obere Grenze für die Kohlenstoffzahl im Molekül liegt im allgemeinen bei etwa 30 C-Atomen, ist hier allerdings grundsätzlich nicht bindend. Fettsäuren natürlichen und/oder synthetischen Ursprungs - sowie die entsprechenden Fettalkohole - stellen in aller Regel Stoffgemische dar, die im Mittel im Molekül 10 bis 24 C-Atome und insbesondere etwa 12 bis 22 C-Atome aufweisen. Auf die einschlägige Fachliteratur wird hier verwiesen.

Fettorganische Verbindungen der hier betroffenen Art können aliphatisch gesättigt, aber ebenso auch 1- und/oder mehrfach olefinisch ungesättigt sein. Insbesondere zahlreiche Vertreter natürlichen Ursprungs zeichnen sich durch das Vorliegen mehr oder weniger großer Mengen an solchen 1- und/oder mehrfach olefinisch ungesättigten Carbonsäuren des angegebenen C-Zahlenbereichs aus.

Ein wichtiges Charakteristikum kann in der Kettenstruktur des jeweiligen Moleküls liegen. Naturstoffbasierte Fettsäuren und daraus abgeleitete Fettalkohole sind wenigstens weitaus überwiegend durch ihre lineare Molekülstruktur gekennzeichnet. Insbesondere die synthetische Chemie kennt entsprechende Vertreter mit mehr oder weniger stark ausgeprägter Kettenverzweigung. Bekannt sind schließlich die Abhängigkeiten sowohl der Rheologie als auch des biologischen Abbauverhaltens von den hier angegebenen Strukturparametern der Komponenten mit Fettcharakter. Bezüglich der Rheologie führen sowohl olefinische Doppelbindungen im Molekül wie die Kettenverzweigung zur Absenkung der Schmelzpunkte. Die biologische Abbaubarkeit ist am besten gewährleistet bei den geradkettigen Vertretern der hier betroffenen Fettkomponenten, wobei entsprechende Vertreter mit geradzahliger Anzahl von Kohlenstoffatomen - wie sie in den naturstoffbasierten Komponenten vorliegen - besonders leicht abbaubar sind. Aber auch beschränkte Kettenverzweigungen mit insbesondere isoliert auftretenden Methylsubstituenten sind durch biologische Abbauprozesse noch wirkungsvoll abzubauen.

Die im Rahmen des erfindungsgemäßen Handelns angestrebten und tatsächlich eintretenden Abbauprozesse sind insbesondere entsprechende aerob ablaufende Mechanismen. Es ist bekanntes Fachwissen, daß unter diesen Bedingungen nicht nur Fettsäuren, Fettalkohole und entsprechende Komponenten mit Estergruppierungen dem bakteriologischen Angriff unterliegen, auch entsprechende Ether werden unter aeroben Bedingungen - wenn auch in der Regel zeitverzögert - abgebaut.

Bewußt ist in der Erfindungsschilderung auf diese der Fachwelt an sich bekannten Sachverhalte eingegangen. Für die Lehre der Erfindung leitet sich unter Berücksichtigung des allgemeinen Fachwissens daraus die Möglichkeit ab, durch Auswahl bestimmter Molekülstrukturen der erfindungsgemäß eingesetzten Stabilisatoren, Einfluß zu nehmen auf den zum bakteriologischen Abbau benötigten Zeitraum dieser Stabilisatoren. Mittelbar erschließt sich damit die Möglichkeit der Regulierung des Zeitraumes, innerhalb dessen die feuchtigkeitsabweisenden hydrophoben Eigenschaften des Stabilisators hinreichend stark ausgeprägt sind um den angestrebten Schutz der Imprägniermasse im Boden sicherzustellen.

Grundsätzlich eignen sich alle Vertreter der hier angesprochenen Klasse von Stabilisatoren auf Basis von Fettalkoholen, Fettsäuren, deren Ester und/oder Ether sowie der Fettsäuresalze. Die jeweilige Auswahl konkreter Vertreter und deren Applikationsform wird durch die jeweils vorgegebenen Bedingungen und im Einzelfall geforderten Anforderungen bestimmt. Fachmännisches Handeln schafft dabei die Möglichkeit individuell ausgewählte Vertreter der angesprochenen Stabilisatorstoffklassen im breitestem Umfang der erfindungsgemäßen Verwendung zuzuführen.

Grundsätzlich gilt hier das Folgende: Bevorzugt ist es, jetzt auch diese Stabilisatoren in wäßriger Zubereitungsform einzusetzen und in dieser Form in das Erdreich einzutragen. Da die Stabilisatoren als solche im wesentlichen wasserunlöslich sind, ist auch hier ihr Einsatz in Form wäßriger Emulsionen und/oder Dispersionen die geeignete technische Lösung. Die Stabilisatoren können dabei - wie nachstehend im einzelnen noch geschildert - sowohl in Abmischung mit den Imprägniermitteln auf Polyvinylacetat-Basis und/oder auch getrennt hiervon zum Einsatz kommen. Die strukturabhängige Rheologie der hier betroffenen fettchemischen Stoffklassen, die Applikationsbedingungen für den praktischen Einsatz und die im Rahmen der Bodenimprägnierung gestellten Anforderungen an die Stabilisatoren im Sinne der erfindungsgemäßen Lehre geben die Möglichkeit die jeweiligen individuellen Vertreter der erfindungsgemäß verwendeten Verbindungen einer Reihe von Untergruppen zuzuordnen. Ohne Anspruch auf Vollständigkeit gilt hier:

Es ist im allgemeinen erwünscht, daß die in wäßriger Emulsions- bzw. Dispersionsform aufgetragenen Stabilisatoren eine Mindest-Filmbildungstemperatur im Bereich von etwa 5 bis 15°C und insbesondere von etwa 5 bis 10°C besitzen. Beim Abziehen der wäßrigen Phase - sei es durch Absinken in den Untergrund, sei es durch Verdunsten - bilden sich dann unter normalen Arbeitsbedingungen hinreichend geschlossene Schichten der Stabilisatoren innerhalb der Imprägnierung und/oder auf ihrer Oberfläche aus, so daß die angestrebte Schutzwirkung gegen die Einwirkung eines Übermaßes an Nässe erfüllt werden kann.

Geeignete Stabilisatoren können dabei im Bereich dieser Filmbildungstemperatur als Feststoffe oder als fließfähige Phasen vorliegen. Beim Einsatz von Stabilisatoren die bei der Filmbildungstemperatur als Feststoffe ausgebildet sind, kann die Mitverwendung insbesondere organischer Fließhilfsmittel geeeignet sein, die bevorzugt mit den Stabilisatoren mischbar und dabei biologisch verträglich und ihrerseits abbaubar sind. Geeignete Fließhilfsmittel dieser Art sind beispielsweise im Temperaturbereich von 5 bis 15°C fließfähige und dabei bevorzugt schwerflüchtige Komponenten auf Basis Alkohole, Ether und/oder Carbonsäureester.

In einer wichtigen Ausführungsform werden allerdings als Stabilisatoren wenigstens anteilsweise olefinisch 1- und/oder mehrfach ungesättigte Fettsäuren, Fettalkohole und/oder deren Derivate mit Ester- und/oder Etherstruktur eingesetzt. Das Vorliegen der olefinischen Doppelbindungen und ihr Ausmaß stellen selbst im Falle geradkettiger Fettkomponenten der hier betroffenen Art in der Regel sicher, daß eine hinreichende Fließfähigkeit im Bereich der Applikationstemperatur des zu behandelnden Bodens gegeben ist, so daß die Ausbildung geschlossener hydrophober Schichten und damit die Ausbildung der angestrebten Wasserstabilisierung sichergestellt sind. Olefinisch ungesättigte Stabilisatoren der hier betroffenen Art bringen dabei den zusätzlichen Vorteil: In an sich bekannter Weise findet unter der Einwirkung des Luftsauerstoffes die Auftrocknung entsprechender fließfähiger Fettverbindungen und damit die Umwandlung der ursprünglich flüssigen Filme in Feststoffilme statt. Das Anforderungsprofil der biologischen Abbaubarkeit bleibt gleichwohl erhalten, vgl. hierzu die bereits eingangs zitierte Literaturstelle Heinz Kastien et al. in "Farbe und Lack" 1992.

Eine Besonderheit für die Ausbildung wenigstens weitgehend geschlossener Filme mit fettchemischen Charakter liegt in der folgenden Ausführungsform: Sowohl gesättigte als auch olefinisch 1- und/oder mehrfach ungesättigte Fettsäuren können durch Einwirkung insbesondere mehrwertiger Kationen in die entsprechenden Salze umgewandelt werden, die sich in der Regel durch veränderte rheologische Eigenschaften auszeichnen. Als mehrwertige salzbildende Kationen sind insbesondere entsprechende Vertreter der 2. und/oder der 3. Hauptgruppe des Periodischen Systems und hier insbesondere Calcium und/oder Aluminium geeignet und bevorzugt. Die Salzbildung kann dabei vor aber auch gegebenenfalls nach dem Auftrag der Stabilisatoren auf den Boden erfolgen. Im Falle entsprechender Salze mit olefinisch ungesättigten Anteilen in den Carbonsäureresten kann auch hier eine nachträgliche oxidative Abreaktion und damit weitergehende Stabilisierung erfolgen.

Besondere Bedeutung kann im Rahmen der erfindungsgemäßen Lehre Stabilisatoren mit Esterstruktur zukommen, wobei in einer ersten Stoffklasse die definierten Fettsäurereste die Esterstruktur bestimmen. In Betracht kommen hier beispielsweise Voll- und/oder Partialester von insbesondere wenigstens anteilsweise olefinisch ungesättigten Fettsäuren mit mehrfunktionellen Alkoholen. Bevorzugte Ester leiten sich von niederen mehrfunktionellen Alkoholen mit insbesondere 2 bis 6 Hydroxylgruppen und bevorzugt mit bis zu 6 C-Atomen ab. Entsprechende Glyceride bzw. Partialglyceride der Fettsäuren und/oder deren Oligomere können besonders interessante Vertreter für die Lehre im Rahmen des erfindungsgemäßen Handelns sein.

Lediglich beispielhaft ist in diesem Zusammenhang auf insbesondere naturstoffbasierte Öle und/oder Fette zu verweisen, die bekanntlich als Triglyceride von Fettsäuren beziehungsweise Fettsäuregemischen mit wenigstens anteilsweise olefinisch ungesättigten Fettsäurekomponenten im Triglycerid anfallen. Je nach Struktur und Konzentration der ungesättigten Fettsäurereste sind diese Öle und/oder Fette zur oxidativen Aushärtung unter dreidimensionaler Vernetzung geeignet. Die Praxis macht hiervon bekanntlich in größtem Umfange Gebrauch, verwiesen wird beispielsweise auf das Gebiet der Lackrohstoffe, auf dem beispielsweise Leinöl-basierte oxidativ aushärtende Öle natürlichen Ursprungs seit altersher in großem Umfang Verwendung finden. Für das erfindungsgemäße Einsatzgebiet können solche Stabilisatoren natürlichen Ursprungs wichtige Komponenten sein. Dabei kann mit oder ohne Zusatz von Härterkomponenten gearbeitet werden, die in der Regel eine Beschleunigung der Ausbildung eines dreidimensional vernetzten Lackfilmes begünstigen. Auf das einschlägige Fachwissen kann in diesem Zusammenhang verwiesen werden.

Eine andere bevorzugte Klasse esterbasierter Stabilisatoren kann als Oligo- bzw. Polyester aus Fettsäuren und/oder Fettalkoholen und mehrfunktionellen Reaktanten aus den Klassen der Oligo- bzw. Polycarbonsäuren und/oder Oligo- bzw. Polyalkohole definiert werden. Beispiele hierfür sind die bekannten Polyester vom Typ der Alkydharze, ebenso aber auch mit Fettsäureresten veresterte Polyvinylalkohol-Oligomere und - Polymere bzw. mit gegebenenfalls olefinisch ungesättigten Fettalkoholresten veresterte (Meth)acrylat-Oligomere und/oder -Polymere. Auch im Rahmen der Auswahl dieser Stabilisatoren kann ein wichtiges Kriterium die Frage der hinreichend vollständigen Abbaubarkeit durch natürliche Abbauprozesse im Boden nicht nur einzelner Anteile der Ester- bzw. Polyesterstruktur sein, insbesondere kann die Auswahl für den erfindungsgemäßen Einsatzzweck mitbestimmt werden durch die Abbaubarkeit auch der primär entstehenden Teilstücke des Einsatzmoleküls, beispielsweise im Rahmen einer Esterhydrolyse.

Im Rahmen der zuvor als geeignete Stabilisatorklasse angesprochenen Alkydharze kann der Einsatz ausgewählter Verbindungen dieser Art bevorzugt sein, die wenigstens weitgehend naturstoffbasiert sind. Der Begriff der Alkydharze erfaßt bekanntlich Polyester aus Polycarbonsäuren, Polyolen und monofunktionellen Alkoholen und/oder Carbonsäuren. Oxidativ reaktive Alkydharze sind grundsätzlich bekannte Produkte des Handels, insoweit kann auf das allgemeine Fachwissen verwiesen werden. Sie können beispielsweise als Grundstoffe für lufttrocknende Lacke Verwendung finden. Bekannte Handelsprodukte sind dabei insbesondere auch in Form wäßriger Dispersionen ausgebildet, die die selbsttrocknenden Alkydharze als feinpartikulär dispergiertes Harz in einer geschlossenen wäßrigen Flüssigphase enthalten. Luftreaktive wäßrige Alkydharzdispersionen dieser Art sind besonders geeignete Einsatzmaterialien für die Zwecke der Erfindung.

Die oxidative Reaktivität solcher Alkydharzderivate leitet sich in der Regel aus einem Gehalt an olefinisch ungesättigten Substituenten am Alkydharz-Polyestermolekül ab. In an sich bekannter Weise können solche olefinisch ungesättigten Reaktivelemente durch Einbau ungesättigter Alkohole und/oder ungesättigter Carbonsäuren in das Alkydharzmolekül eingetragen werden. Besonderes Interesse können hier - auch gerade im Zusammenhang mit der erfindungsgemäßen Lehre - solche Vertreter der angesprochenen Alkydharztypen haben, die wenigstens weitgehend auf naturstoffbasierten Grundbestandteilen aufgebaut sind. So können zur Derivatisierung der Alkydharze Monocarbonsäuren und/oder monofunktionelle Alkohole natürlichen Ursprungs Verwendung finden. Beim Einsatz von Dicarbonsäuren und wenigstens 3-funktionellen Alkoholen in Kombination mit monofunktionellen Carbonsäuren und gegebenenfalls weiteren Diolen werden beispielsweise entsprechende Monocarbonsäure-derivatisierte Alkydharze zugänglich, die dadurch oxidativ reaktiv bzw. oxidativ vernetzbar ausgestaltet werden können, daß die eingesetzten Monocarbonsäuren wenigstens anteilsweise einfach und/oder mehrfach olefinisch ungesättigt sind. In an sich bekannter Weise kann durch Umkehr der Funktionalitäten auch ein mit olefinisch ungesättigten Alkoholen modifiziertes oxidativ reaktives Alkydharz hergestellt werden.

Naturstoffbasierte Alkydharze der erfindungsgemäß besonders bevorzugten Art gehen dabei vom Glycerin als 3-funktionelle Polyolkomponente und Fettsäuren natürlichen Ursprungs als monofunktionelle Carbonsäurekomponente aus. Die monofunktionellen Reaktanten werden dabei im Mittel etwa in solchen Mengen eingesetzt, daß die gewünschte Abreaktion mit Dicarbonsäuren - die in einer bevorzugten Ausführungsform ihrerseits in natürlichen Abbauprozessen abbaubar sind - möglich wird. Wenigstens überwiegend naturstoffbasierte modifizierte Alkydharze dieser Art zeichnen sich dann beispielsweise dadurch aus, daß mehr als 50 Gew.-% und vorzugsweise zwischen 60 und 70 Gew.-% des Alkydharzes aus naturstoffbasierten Komponenten, insbesondere Glycerin und monofunktionellen Fettsäuren gebildet wird, während zum Rest Dicarbonsäuren und gegebenenfalls zusätzliche Diolkomponenten im Polymermolekül vorliegen.

Die Lehre der vorliegenden Erfindung, in einer ersten Verfahrensstufe die wäßrige Netzmittelzubereitung mit vergleichsweise sehr geringen Mengen des Binders in das zu verfestigende Erdreich einzutragen, behält auch für die Variante des Miteinsatzes von Stabilisatoren Gültigkeit. Diese Stabilisatoren können dementsprechend nach der erfindungsgemäßen Vorbehandlung und nach der Hauptimprägnierung der Erdreichoberfläche mit Binder in einer nachfolgenden getrennten Verfahrensstufe eingebracht werden, ebenso ist es aber auch im Sinne der Lehre der DE 44 28 269 möglich, den Eintrag der Hauptmenge des Binders mit dem Eintrag der Stabilisatoren in einer Verfahrensstufe zu verknüpfen. Hierzu werden in der Regel die wäßrigen Zubereitungen der Bindermasse und der Stabilisatoren zunächst miteinander vermischt und dann gemeinsam auf das erfindungsgemäß vorbehandelte Erdreich aufgetragen.

Die im jeweiligen Einzelfall einzusetzenden Mengen einerseits an Bindern auf Basis von Estern des Polyvinylalkohols und andererseits - soweit erwünscht - an Stabilisatoren, wird durch eine Mehrzahl von Faktoren beeinflußt. Im allgemeinen sind Mindestmengen der jeweiligen Komponente(n) von wenigstens etwa 50 g/m² Bodenfläche und vorzugsweise Mengen von wenigstens etwa 100 g/m² Bodenfläche wünschenswert. Die hier angegebenen unteren Grenzwerte beziehen sich dabei auf die wasserfreien und von gegebenenfalls mitverwendeten Fließhilfsmitteln freien Wertstoffe beziehungsweise Wertstoffgemische. Mengen der Binder und gegebenenfalls der Stabilisatoren bis 400 g/m² Bodenfläche können in Sonderfällen wünschenswert sein. Im allgemeinen werden befriedigende Ergebnisse mit Mengen im Bereich von etwa 150 bis 250 g/m² Bodenfläche erzielt. Dabei gilt der bereits kurz angesprochene zusätzliche Sachverhalt:

Die erfindungsgemäß vorgesehene Vorkonditionierung der zu verfestigenden Erdreichoberfläche mit der Netzmittel und sehr geringe Mengen an Binder enthaltenden wäßrigen Zubereitung schafft die Möglichkeit, deutliche Einsparungen an Binder einzusetzen und gleichwohl gute Festigkeitswerte im Boden einzustellen. So kann die erfindungsgemäße Erdreichverfestigung auch schon dann im befriedigenden Ausmaß sichergestellt werden, wenn die Bindermenge - und gewünschtenfalls damit auch die Stabilisatormenge - auf beispielsweise 50 bis 70 Gew.-% derjenigen Menge reduziert wird, die ohne eine erfindungsgemäße Vorstufe zur hinreichenden Verfestigung in das Erdreich einzutragen ist. Begreiflicherweise werden absolute Zahlen zu hier notwendigen Mengen an Bindern und/oder Stabilisatoren jeweils sehr stark durch die im Einzelfall betroffene Bodenbeschaffenheit gesteuert. Die Imprägnierung der Bodenoberfläche gelingt darüberhinaus im erfindungsgemäßen Sinne sehr viel leichter und gegebenenfalls auch in tiefere Bodenbereiche hinein, als ohne Einsatz der erfindungsgemäß vorgesehenen Vorbehandlungsstufe mit dem tensidischen Wertstoffgemisch. Es ist einleuchtend, daß hierdurch in einer Vielzahl von Anwendungsfällen - beispielsweise bei der Absicherung rutschgefährdeter Hanglagen - wertvolle Zusatzvorteile einstellbar werden.

Die Mengenverhältnisse an Binde- beziehungsweise Imprägniermittel einerseits und Stabilisator andererseits - auch hier jeweils bezogen auf die insbesondere wasserfreien reinen Wertstoffgemische - können in einem breiten Bereich schwanken. Geeignet sind beispielsweise Mengenverhältnisse des insbesondere PVAc-basierten Bindemittels zu den Stabilisatoren (wasserfreie Wertstoffe) im Bereich von etwa 5 : 1 bis 1 : 5 und vorzugsweise im Bereich von 1 : 3 bis 2 : 1. In zahlreichen Anwendungsfällen haben sich etwa gleiche Mengenverhältnisse an Binder und Stabilisator als brauchbar erwiesen.

Durch hinreichende Verdünnung des Wertstoffgehaltes in den zum Einsatz kommenden wäßrigen Zubereitungen kann zusätzlich in gewissem Ausmaß Einfluß auf die Tiefe der in der Bodenoberfläche sich einstellenden Imprägnierung genommen werden. Für die Stufe des Eintrags der Hauptmenge des Bindemittels sind wäßrige Zubereitungen bevorzugt, deren Gehalt an Polymersubstanz unterhalb 50 Gew.-% und vorzugsweise unterhalb 30 Gew.-% liegt, besonders geeignet können hier wäßrige Zubereitungen mit einer Untergrenze des polymeren Binders im Bereich von etwa 3 bis 5 Gew.-% sein. Besonders geeignete Gehalte der Polymerphase in den wäßrigen Flüssigphasen zum Eintrag der Hauptmenge des Bindemittels liegen im Bereich von 5 bis 20 Gew.-% und insbesondere im Bereich von 5 bis 10 Gew.-%. Entsprechende Zahlenangaben gelten für den Fall der Mitverwendung beziehungsweise des Eintrags von Stabilisatoren der geschilderten Art.

Als polymeres Bindemittel der Imprägniermasse ist primär Polyvinylacetat geeignet. Die erfindungsgemäße Lehre schränkt sich darauf jedoch nicht ein. Auch andere Polymere des Vinylalkohols mit niederen Monocarbonsäuren - insbesondere mit bis zu 4 oder 5 C-Atomen im Carbonsäurerest - kommen in Betracht. Neben Polyvinylacetat kommt insbesondere dem Polyvinylpropionat bzw. seinen wäßrigen Zubereitungen wichtige Bedeutung zu. Dabei können sowohl Homopolymere als auch Copolymere der hier angegebenen Polyvinylester zum praktischen Einsatz kommen.

In einer weiteren Modifikation der erfindungsgemäßen Lehre kann ein wichtiger Bestandteil der Imprägniermasse aus der Gruppe der Vinylestercopolymeren abgeleitet sein. In Betracht kommen hier insbesondere Copolymere der niederen Vinylester von der Art des Vinylacetats und/oder -propionats mit Vinylestern höherer monofunktioneller Carbonsäuren. In dieser Copolymerengruppe sind bevorzugte Vertreter die Vinylester von insbesondere gesättigten Monocarbonsäuren mit wenigstens 8 und vorzugsweise mit wenigstens 10 C-Atomen, dabei kann dem Bereich von 10 bis 16 C-Atomen im Monocarbonsäurerest wiederum besondere Bedeutung zukommen. Ein aus einer Mehrzahl von Überlegungen heraus wichtiger Vertreter für ein solches Copolymeres ist beispielsweise ein Polyvinylacetat-Colaurat.

Eine Besonderheit bezüglich der Notwendigkeit des Weichmacherzusatzes kann für den Fall des Einsatzes der zuvor genannten Vinylestercopolymeren gegeben sein, die im Molekül niedere Vinylester von der Art des Vinylacetats und/oder -propionats zusammen mit Vinylestern höherer monofunktioneller Carbonsäuren - insbesondere des Fettsäurebereiches - enthalten. Weiterführende Untersuchungen der Anmelderin haben gezeigt, daß Imprägniermittel auf Basis dieser Vinylestercopolmeren auch schon ohne Zusatz von Weichmachern die beiden Erfordernisse der hinreichend entsprödeten Imprägnierung und der biologischen Abbaubarkeit erfüllen. Hier kann also auf die Mitverwendung von Weichmachern verzichtet werden, wie sie nach dem Stand der Technik bekannt sind beziehungsweise im Rahmen der eingangs zitierten DE 43 24 474 der Anmelderin beschrieben werden.

Auch im Rahmen der erfindungsgemäßen Lehre kann von den technischen Elementen Gebrauch gemacht werden, die im einschlägigen Stand der Technik zur Ausbildung entsprechender Oberflächenfilme entwickelt worden sind. Beispielhaft sei hier auf die Mitverwendung von wachstumsfördernden Wirkstoffen, insbesondere Hilfsstoffen mit Düngemittelcharakter und/oder auf die Mitverwendung von bevorzugt feinteiligem partikulärem Feststoffgut, insbesondere in der wäßrigen Zubereitung des Imprägniermittels verwiesen. In dem zuletzt angesprochenen Fall sieht der Stand der Technik bekanntlich insbesondere die Mitverwendung von feinteiligen Feststoffen auf Naturstoffbasis wie Holzmehl, Strohpartikel, Getreideschalen, Kokos und/oder Flachsfasern und dergleichen vor, um auf diese Weise die Entstehung lokaler Durchbruchsstellen zur weitergehenden Förderung des Pflanzenwachstums zu ermöglichen, ohne dabei den Gesamtzusammenhalt der verfestigten Schicht zu gefährden.

Die Mitverwendung geringer Mengen tensidischer Komponenten, insbesondere in den wäßrigen Zubereitungen des Imprägniermittels und/oder der Stabilistoren kann wünschenswert sein. Geeignet sind dabei insbesondere oberflächenaktive Komponenten vom O/W-Typ, die sich in der bevorzugten Ausführungsform ihrerseits auch durch biologische Verträglichkeit und insbesondere biologische Abbaubarkeit auszeichnen. Grundsätzlich sind hier die zuvor im Zusammenhang mit der Vornetzung der zu imprägnierenden Bodenmasse aufgezählten Netzhilfen mit bevorzugten HLB-Werten im Bereich von 8 bis 18 und vorzugsweise von 10 bis 18 geeignet. Besondere Bedeutung kann in diesem Zusammenhang entsprechenden Tensiden auf Basis von Alkylpolyglykosiden (APG) zukommen. Durch Einsatz solcher Komponenten kann einerseits die Stabilisierung, insbesondere von Stabilisatorkomponenten in wäßrigen Zubereitungen, erleichtert werden - beispielsweise die Stabilisierung von Leinöl als wäßrige Dispersion - andererseits kann damit aber auch die Benetzung des zu verfestigenden Bodens zusätzlich gefördert werden. Praktische Bedeutung kommt einer solchen Arbeitshilfe beispielsweise bei der Verfestigung von übertrockneten Sandflächen zu. Zu Art und Menge er jeweils eingesetzten oberflächenaktiven Hilfsmittel wird auf das einschlägige Fachwissen verwiesen.

In an sich bekannter Weise kann der Auftrag der bodenverfestigenden wäßrigen Wirkstoffzubereitungen mit dem Auftrag von Pflanzensamen erfolgen. Die entsprechende Ausrüstung des Bodens kann aber auch unabhängig von der Verfestigung vor oder nach dem Auftrag insbesondere der erfindungsgemäß definierten wäßrigen Imprägniermasse erfolgen.

Feldversuche mit den erfindungsgemäß beschriebenen Hilfsmitteln haben gezeigt, daß nicht nur die angestrebte Verfestigung der Erdreichoberfläche eingestellt und über einen beträchtlichen Zeitraum von wenigstens mehreren Wochen aufrechterhalten werden kann - ohne dabei die Keimungsvorgänge und das sich bildende Pflanzenwachstum substantiell zu beeinträchtigen -, es hat sich darüberhinaus ein weiterer häufig wünschenswerter Effekt gezeigt: Die Wasserretention ist in dem erfindungsgemäß ausgerüsteten Bodenbereichen deutlich erhöht gegenüber benachbarten nicht behandelten Bodenbereichen. Es leuchtet ein, daß sich hier insbesondere für die Verfestigung und Begrünung von Erdreichflächen in Trockengebieten und/oder unter vergleichsweise heißen klimatischen Bedingungen wichtige Vorteile auftuen.

Die Erfindung sieht zur Verstärkung dieses Effektes eine weitere mögliche Modifikation vor: Die naturstoffbasierte Chemie, die synthetische Chemie und/oder halbsynthetische Chemie hat eine Mehrzahl von Polymerkomponenten entwickelt, die sich durch ein extremes Wasseraufnahmevermögen und ein hohes Retentionsvermögen für das aufgenommene Wasser auszeichnen. Unter dem Fachbegriff der "super-slupers" finden diese Materialien auf verschiedenden Anwendungsgebieten, insbesondere im hygienischen Bereich großtechnische Verwertung. Geeignete Zubereitungsformen solcher wasserbindenden Polymerstoffe können nun auch erfindungsgemäß zur Ausrüstung der Oberflächenschichten des Erdreichs und damit zur Förderung des Pflanzenwachstums unter Einschränkung der Menge und/oder Häufigkeit einer künstlichen Beregnung der mit Pflanzensamen, beispielsweise Grassamen ausgerüsteten Erdreichoberfläche Verwendung finden. Diese wasserbindenden halbsynthetischen oder vollsynthetischen Polymerstoffe können dabei vor der Behandlung der Erdreichoberfläche mit den erfindungsgemäß beschriebenen Imprägniermassen in das Erdreich eingetragen werden, gegebenenfalls ist aber auch an eine Kombination der wasserbindenden Hilfsstoffe mit wenigstens einem Anteil der Imprägniermasse mit Klebstoffcharakter zu denken. Zur chemischen Beschaffenheit dieser wasserbindenden Hilfsstoffe wird auf die einschlägige Fachliteratur zu den Hilfsstoffen der hier ansprochenen Art verwiesen. Auch die Mitverwendung von wachstumsfördernden Hilfsstoffen ist möglich und fällt in den Rahmen der erfindungsgemäßen Lehre.

## Patentansprüche

1. Verfahren zur Intensivierung der Oberflächenverfestigung erosionsgefährdeten Erdreichs durch Eintrag wasserbasierter und haftvermittelnder Imprägniermassen auf Basis von Estem des Polyvinylalkohols mit C₁₋₅-Monocarbonsäuren und deren Gemischen mit höheren Monocarbonsäuren (Binder) gewünschtenfalls unter Mitverwendung von bei Luftzutritt aushärtenden Komponenten zur Erhöhung der Wasserfestigkeit der Imprägniermasse (Stabilisator), dadurch gekennzeichnet, daß man die Erdreichimprägnierung mehrstufig ausbildet und dabei wenigstens in der 1. Imprägnierstufe eine wäßrige Zubereitung einsetzt, die biologisch verträgliche Netzmittel zur Beschleunigung und/oder Intensivierung der Erdreichbenetzung mit wäßriger Phase und gewünschtenfalls Anteile des Bindemittels (weniger als 50 Gew.-% und bevorzugt weniger als 20 Gew.-% der insgesant einzutragenden Bindermenge) enthält, und in wenigstens einer weiteren Arbeitsstufe die Hauptmenge des Bindemittels und gewünschtenfalls zusätzlich Stabilisator einträgt.

2. Verfahren nach Anspruch 1, dadurch gekennzeichnet, daß man auch schon in der 1.Imprägnierstufe zusammen mit den Netzmitteln Anteile des insgesamt aufzubringenden Stabilisators einträgt.

3. Verfahren nach Ansprüchen 1 und 2, dadurch gekennzeichnet, daß man in der 1 .Imprägnierstufe mit wäßrigen Binderzubereitungen arbeitet, deren Bindergehalt unter 5 Gew.-% liegt und vorzugsweise 0,3 bis 2 Gew.-% beträgt, wobei weiterhin bevorzugt ist, den Gehalt dieser wäßrigen Binderzubereitung der 1.Imprägnierstufe an erfindungsgemäß mitverwendeten Netzmitteln auf Werte zu begrenzen, die um wenigstens eine Größenordnung geringer als der Bindergehalt liegen.

4. Verfahren nach Ansprüchen 1 bis 3, dadurch gekennzeichnet, daß als Netzmittel oberflächenaktive Verbindungen mit HLB-Werten von wenigstens 7, vorzugsweise gleich/größer 8 eingesetzt werden, wobei der Einsatz entsprechender nichtionischer Netzmittel beziehungsweise Netzhilfen mit HLB-Werten des Bereiches von 10 bis 18 bevorzugt sein kann.

5. Verfahren nach Ansprüchen 1 bis 4, dadurch gekennzeichnet, daß biologisch abbaubare und bevorzugt wenigstens anteilsweise Naturstoff-basierte Netzhilfen eingesetzt werden, wobei Verbindungen aus dem Bereich entsprechender Ester, Partialester und deren Poly- beziehungsweise Oligo-Ethoxylate sowie der Acetale - hier insbesondere aus der Klasse der Alkyl(poly)glykoside (APG) - bevorzugt sein können.

6. Verfahren nach Ansprüchen 1 bis 5, dadurch gekennzeichnet, daß in der ersten Imprägnierstufe wäßrig-verdünnte Zubereitungen mit Gehalten an Netzmitteln beziehungsweise Netzhilfen von höchstens 1 Gew.-%, vorzugsweise von höchstens 0,5 Gew.-% und insbesondere im Bereich von maximal 0,1 bis 0,2 Gew.-% eingesetzt werden.

7. Verfahren nach Ansprüchen 1 bis 6, dadurch gekennzeichnet, daß der Eintrag wenigstens der Hauptmenge des Binders in das aus der Vorbehandlungsstufe noch feuchte beziehungsweise nasse Erdreich erfolgt.

8. Verfahren nach Ansprüchen 1 bis 7, dadurch gekennzeichnet, daß wenigstens in der Stufe des Eintrags der Hauptmenge des Binders wäßrige Zubereitungen verwendet werden, die zusammen mit den Polymeren auf Basis der Polyvinylalkohol-Ester Weichmacher enthalten, die bevorzugt biologisch abbaubar sind und insbesondere wenigstens anteilsweise den folgenden Gruppen zugeordnet sind: Triester des Glycerins mit niederen aliphatischen Monoocarbonsäuren, Citronensäuretriester mit niederen aliphatischen monofunktionellen Alkoholen und/oder epoxidierte Triglyceride wenigstens anteilsweise olefinisch ungesättigter Fettsäuren.

9. Verfahren nach Ansprüchen 1 bis 8, dadurch gekennzeichnet, daß Binder auf Basis Polyvinylacetat und/oder -propionat und/oder auf Basis von Copolymeren dieser niederen Vinylester mit Vinylestern höherer Fettsäuren, insbesondere Vinyllaurat, eingesetzt werden, wobei die Vinylester der höheren Fettsäuren bevorzugt in untergeordneten Mengen im Copolymeren vorliegen.

10. Verfahren nach Ansprüchen 1 bis 9, dadurch gekennzeichnet, daß mit biologisch abbaubaren Schutzkolloiden stabilisierte wäßrige Polyvinylacetat-Dispersionen zum Einsatz kommen, wobei Polyvinylalkohol und/oder Stärke und/oder wasserlösliche Stärkederivate bevorzugte Emulgatoren sein können, dabei vorzugsweise deren Einsatzmengen aber derart eingeschränkt sind, daß die hinreichende Festigkeit des Polyvinylacetatüberzuges auf dem Boden gegen Bewitterungseinflüsse erhalten bleibt.

11. Verfahren nach Ansprüchen 1 bis 10, dadurch gekennzeichnet, daß zur Erhöhung der Wasserfestigkeit der behandelten Erdreichschichten zusätzlich zu dem Binder bei Raumtemperatur feste und/oder bei Luftzutritt aushärtende Fettsäuren, Fettalkohole und/oder ihre wenigstens weitgehend wasserunlöslichen Ester, Ether und/oder Salze als abbaubare und biologisch verträgliche Stabilisatoren in das Erdreich eingetragen werden.

12. Verfahren nach Ansprüchen 1 bis 11, dadurch gekennzeichnet, daß als Stabilisatoren wenigstens anteilsweise olefinisch 1- und/oder mehrfach ungesättigte Fettsäuren, Fettalkohole und/oder deren Derivate mit Ether- und/oder Esterstruktur eingesetzt werden.

13. Verfahren nach Ansprüchen 1 bis 12, dadurch gekennzeichnet, daß als Stabilisatoren wenigstens anteilsweise Salze von gesättigten und/oder olefinisch 1- und/oder mehrfach ungesättigten Fettsäuren mit mehrwertigen Kationen eingesetzt werden, wobei entsprechende Vertreter der 2. und/oder 3. Hauptgruppe des Periodischen Systems - und hier insbesondere die Salze des Calciums und/oder Aluminiums - bevorzugt sind.

14. Verfahren nach Ansprüchen 1 bis 13, dadurch gekennzeichnet, daß die Stabilisatoren in Abmischung mit der Hauptmenge des Binders auf Polyvinylester-Basis und/oder im Anschluß an eine vorgängige Erdreichstabilisierung mit der Polyvinylester-basierten Imprägnierung aufgetragen werden.

15. Verfahren nach Ansprüchen 1 bis 14, dadurch gekennzeichnet, daß auch die Stabilisatoren in wäßriger Zubereitungsform, insbesondere in Form wäßriger Dispersionen und/oder Emulsionen, eingesetzt und in das Erdreich eingetragen werden.

16. Verfahren nach Ansprüchen 1 bis 15, dadurch gekennzeichnet, daß wenigstens beim Einsatz von Stabilisatoren, die im Temperaturbereich von 5 bis 15°C als Feststoffe vorliegen, organische Fließhilfsmittel mitverwendet werden, die bevorzugt mit den Stabilisatoren mischbar und dabei insbesondere biologisch verträglich und abbaubar sind, wobei entsprechende Komponenten auf Basis Alkohole, Ether und/oder Carbonsäureester bevorzugt sein können.

17. Verfahren nach Ansprüchen 1 bis 16, dadurch gekennzeichnet, daß die Polyvinylester-basierten Bindemittel und die Stabilisatoren in Mengenverhältnissen (wasserfreie Wertstoffe) von 5 : 1 bis 1 : 5, vorzugsweise von 1 : 3 bis 2 : 1, eingesetzt werden.

18. Verfahren nach Ansprüchen 1 bis 17, dadurch gekennzeichnet, daß Stabilisatoren beziehungsweise deren Abmischungen mit filmbildenden Hilfsmitteln eingesetzt werden, deren Mindest-Filmbildungstemperatur im Bereich von 0 bis 15°C liegt.

19. Verfahren nach Ansprüchen 1 bis 18, dadurch gekennzeichnet, daß die Bindemittel auf Polyvinylester-Basis und die Stabilisatoren jeweils in Mengen von wenigstens 50 g/m² Bodenfläche, vorzugsweise in Mengen von wenigstens 100 g/m² Bodenfläche und insbesondere in Mengen von 150 bis 250 g/m² Bodenfläche aufgetragen werden.

20. Verfahren nach Ansprüchen 1 bis 19, dadurch gekennzeichnet, daß zum Eintrag der Hauptmasse des Binders und bevorzugt auch gegebenenfalls eingesetzter Stabilisatoren wäßrig verdünnte Zubereitungen eingesetzt werden, deren jeweiliger Wertstoffgehalt bei Konzentrationen unterhalb 50 Gew.-%, vorzugsweise unterhalb 30 Gew.-% und insbesondere im Bereich von 5 bis 20 Gew.-%, liegt.

21. Verfahren nach Ansprüchen 1 bis 20, dadurch gekennzeichnet, daß vor und/oder zusammen mit den Hilfsmitteln zur Bodenverfestigung Pflanzensamen und/oder weitere Hilfsstoffe zur Förderung des Pflanzenwachstums, insbesondere Düngemittel und/oder Wasser-Retentionsmittel, in das Erdreich eingebracht werden.

## Claims

1. A process for intensifying the surface stabilization of soil susceptible to erosion by introduction of water-based adhesion-promoting impregnating compounds based on esters of polyvinyl alcohol with C₁₋₅ monocarboxylic acids and mixtures thereof with higher monocarboxylic acids (binders), if desired using components curing on contact with air to increase the water resistance of the impregnating compound (stabilizer), characterized in that impregnation of the soil is carried out in several stages and in that an aqueous preparation containing biologically compatible wetting agents to accelerate and/or intensify wetting of the soil with aqueous phase and, if desired, parts of the binder (less than 50% by weight and preferably less than 20% by weight of the total quantity of binder to be introduced) is used at least in the first impregnating stage, most of the binder and, if desired, also stabilizer being introduced in at least one other stage.

2. A process as claimed in claim 1, characterized in that parts of the total stabilizer to be applied are introduced even in the first impregnating stage.

3. A process as claimed in claims 1 and 2, characterized in that the first impregnating stage is carried out with aqueous binder preparations with a binder content of less than 5% by weight and preferably from 0.3 to 2% by weight, the content of wetting agents used in accordance with the invention in this aqueous binder preparation used in the first impregnating stage being limited to values which are lower by at least one order of magnitude than the binder content.

4. A process as claimed in claims 1 to 3, characterized in that surface-active compounds with HLB values of at least 7 and preferably 8 or higher are used as wetting agents, corresponding nonionic wetting agents or wetting aids with HLB values of 10 to 18 being particularly preferred.

5. A process as claimed in claims 1 to 4, characterized in that biologically degradable wetting aids based at least partly on natural substances are used, compounds selected from corresponding esters, partial esters and their polyethoxylates or oligoethoxylates and the acetals, more especially from the class of alkyl (poly)glycosides (APG), being particularly preferred.

6. A process as claimed in claims 1 to 5, characterized in that dilute aqueous preparations containing at most 1% by weight, preferably at most 0.5% by weight and, more preferably, at most 0.1 to 0.2% by weight of wetting agents or wetting aids are used in the first impregnating stage.

7. A process as claimed in claims 1 to 6, characterized in that at least the main quantity of binder is introduced into the soil still moist or wet from the pretreatment stage.

8. A process as claimed in claims 1 to 7, characterized in that at least the stage where the main quantity of binder is introduced is carried out with aqueous preparations which, together with the polymers based on polyvinyl alcohol esters, contain plasticizers which are preferably biodegradable and which, in particular, belong at least partly to the following groups: triesters of glycerol with lower aliphatic monocarboxylic acids, citric acid triesters with lower aliphatic monohydric alcohols and/or epoxidized triglycerides of at least partly olefinically unsaturated fatty acids.

9. A process as claimed in claims 1 to 8, characterized in that binders based on polyvinyl acetate and/or propionate and/or on copolymers of these lower vinyl esters with vinyl esters of higher fatty acids, more particularly vinyl laurate, are used, the vinyl esters of the higher fatty acids preferably being present in small quantities in the copolymer.

10. A process as claimed in claims 1 to 9, characterized in that aqueous polyvinyl acetate dispersions stabilized with biodegradable protective colloids are used, polyvinyl alcohol and/or starch and/or water-soluble starch derivatives being preferred emulsifiers, although the quantities in which they are used are preferably limited to such an extent that the coating of polyvinyl acetate on the soil remains sufficiently resistant to the effects of weathering.

11. A process as claimed in claims 1 to 10, characterized in that, to increase the resistance of the treated soil layers to water, fatty acids or fatty alcohols which are solid at room temperature and/or which cure on contact with air and/or at least substantially water-insoluble esters, ethers and/or salts thereof are introduced into the soil in addition to the binder as degradable and biologically compatible stabilizers.

12. A process as claimed in claims 1 to 11, characterized in that at least partly monoolefinically and/or polyolefinically unsaturated fatty acids, fatty alcohols and/or derivatives thereof with an ether and/or ester structure are used as stabilizers.

13. A process as claimed in claims 1 to 12, characterized in that salts of saturated and/or monoolefinically and/or polyolefinically unsaturated fatty acids with polyvalent cations are at least partly used as stabilizers, corresponding representatives of the second and/or third main group of the periodic system, more particularly the salts of calcium and/or aluminium, being preferred.

14. A process as claimed in claims 1 to 13, characterized in that the stabilizers are applied in admixture with the main quantity of polyvinyl ester-based binder and/or after preliminary soil stabilization with the polyvinyl ester-based impregnation.

15. A process as claimed in claims 1 to 14, characterized in that the stabilizers are also used and introduced into the soil in the form of an aqueous preparation, more particularly in the form of an aqueous dispersion and/or emulsion.

16. A process as claimed in claims 1 to 15, characterized in that, at least in cases where the stabilizers used are present as solids at temperatures of 5 to 15°C, organic flow aids which are preferably miscible with the stabilizers and which, in particular, are biologically compatible and degradable are employed, organic flow aids based on alcohols, ethers and/or carboxylic acid esters being preferred.

17. A process as claimed in claims 1 to 16, characterized in that the polyvinyl ester-based binders and the stabilizers are used in quantity ratios (water-free useful materials) of 5:1 to 1:5 and preferably 1:3 to 2:1.

18. A process as claimed in claims 1 to 17, characterized in that stabilizers or mixtures thereof with film-forming agents with a minimum film-forming temperature of 0 to 15°C are used.

19. A process as claimed in claims 1 to 18, characterized in that the polyvinyl ester-based binders and the stabilizers are each used in quantities of at least 50 g/m5, preferably in quantities of at least 100 g/m5 and, more preferably, in quantities of 150 to 250 g/m5 of soil to be treated.

20. A process as claimed in claims 1 to 19, characterized in that dilute aqueous preparations of which the particular useful-material concentration is below 50% by weight, preferably below 30% by weight and more preferably from 5 to 20% by weight are used for introducing most of the binder and, preferably, any stabilizers used.

21. A process as claimed in claims 1 to 20, characterized in that plant seeds and/or other auxiliaries for promoting plant growth, more particularly fertilizers and/or water retention aids, are introduced into the soil together with the soil-stabilizing auxiliaries.

## Revendications

1. Procédé pour intensifier la solidification de surface des sols menacés par l'érosion au moyen de l'apport de masses d'imprégnation à base aqueuse et jouant un rôle d'adhésif, à base d'esters d'alcools polyvinyliques avec des acides monocarboxyliques en C₁ à C₅ et leurs mélanges avec des acides monocarboxyliques supérieurs (liants), le cas échéant avec l'utilisation simultanée du composant durcissant par apport d'air afin d'accroître l'étanchéité à l'eau de la masse d'imprégnation (stabilisateurs),
caractérisé en ce que
l'imprégnation du sol s'effectue en plusieurs étapes et on utilise au moins dans la première étape d'imprégnation une préparation aqueuse qui contient des agents mouillants biologiquement compatibles pour accélérer et/ou intensifier l'humidification du sol avec la phase aqueuse, et le cas échéant des fractions de liants (moins de 50 % en poids et de préférence moins de 20 % en poids de la masse de liant à introduire au total), et dans au moins une autre étape de travail, on introduit la plus grande partie du liant et si on le désire en outre un stabilisateur.

2. Procédé selon la revendication 1,
caractérisé en ce qu'
on introduit dès la première étape d'imprégnation, avec les agents mouillants, des fractions du stabilisateur à introduire au total.

3. Procédé selon les revendications 1 et 2,
caractérisé en ce que
dans la première étape d'imprégnation on travaille avec des préparations aqueuses de liants dont la teneur en liant se situe en dessous de 5 % en poids et de préférence va de 0,3 à 2 % en poids, opération dans laquelle en outre on préfère limiter la teneur de cette préparation aqueuse de liant dans la première étape d'imprégnation en agents mouillants simultanément utilisés selon l'invention, à des valeurs inférieures d'au moins un ordre de grandeur à la teneur de liant.

4. Procédé selon les revendications 1 à 3,
caractérisé en ce qu'
on utilise comme agent mouillant des composés tensioactifs à valeurs d'EHL d'au moins 7, de préférence égal ou supérieur à 8, l'utilisation d'agents mouillants non ioniques correspondants ou selon les cas d'adjuvants de mouillage à valeurs d'EHL allant de 10 à 18 pouvant être préférée.

5. Procédé selon les revendications 1 à 4,
caractérisé en ce qu'
on utilise des adjuvants de mouillage à base de produits biodégradables et de préférence au moins partiellement naturels, les composés du domaine des esters, ou esters partiels correspondants et de leurs poly- ou selon les cas oligoéthoxylates ainsi que les acétals - ici en particulier de la classe des alkyl(poly)glycosides (APG) - pouvant être préférés.

6. Procédé selon les revendications 1 à 5,
caractérisé en ce que
dans la première étape d'imprégnation on utilise des préparations aqueuses diluées ayant des teneurs en agents mouillants ou selon les cas en adjuvants de mouillage d'au plus 1 % en poids, de préférence d'au plus 0,5 % en poids et en particulier dans un intervalle d'au maximum 0,1 à 0,2 % en poids.

7. Procédé selon les revendications 1 à 6,
caractérisé en ce que
l'apport au moins de la plus grande partie du liant s'effectue dans le sol encore humide ou selon les cas mouillé de l'étape de prétraitement.

8. Procédé selon les revendications 1 à 7,
caractérisé en ce qu'
au moins dans l'étape d'introduction de la plus grande partie du liant, on utilise des préparations aqueuses qui contiennent avec les polymères à base d'ester d'alcool polyvinylique des plastifiants qui sont de préférence biodégradables et qui se répartissent au moins en partie dans les groupes suivants : triesters de glycérine avec des acides monocarboxyliques aliphatiques inférieurs, triesters d'acide citrique avec des alcools monofonctionnels aliphatiques inférieurs et/ou triglycérides époxydés d'acides gras au moins partiellement oléfiniquement insaturés.

9. Procédé selon les revendications 1 à 8,
caractérisé en ce qu'
on utilise des liants à base d'acétate et/ou de propionate de polyvinyle et/ou à base de copolymères de ces esters vinyliques inférieurs avec des esters vinyliques d'acides gras supérieurs, en particulier le laurate de vinyle, les esters vinyliques des acides gras supérieurs se présentant de préférence en quantités secondaires dans les copolymères.

10. Procédé selon les revendications 1 à 9,
caractérisé en ce qu'
on utilise des dispersions aqueuses d'acétate de polyvinyle stabilisé avec des colloïdes protecteurs biodégradables, l'alcool polyvinylique et/ou l'amidon et/ou les dérivés d'amidon soluble dans l'eau pouvant être des émulsifiants préférés, ou de préférence les quantités employées sont limitées de manière à maintenir une solidité suffisante du revêtement d'acétate de polyvinyle sur le sol vis-à-vis des influences climatiques.

11. Procédé selon les revendications 1 à 10,
caractérisé en ce que
pour accroître l'étanchéité à l'eau des couches de sol traitées, on apporte, outre les liants, des acides gras, alcools gras, solides à la température ambiante et/ou durcissant sous l'action de l'air, ou leurs esters, éthers et/ou sels au moins largement insolubles dans l'eau comme stabilisateurs dégradables et biocompatibles dans le sol.

12. Procédé selon les revendications 1 à 11,
caractérisé en ce qu'
on utilise comme stabilisateurs des acides gras ou alcools gras au moins partiellement mono- et/ou polyinsaturés, et/ou leurs dérivés à structure éther et/ou ester.

13. Procédé selon les revendications 1 à 12,
caractérisé en ce qu'
on utilise comme stabilisateurs au moins en partie des sels d'acides gras saturés et/ou oléfiniquement mono- et/ou polyinsaturés avec des cations polyvalents, les représentants correspondants des deuxième et/ou troisième groupe principal de la classification périodique des éléments - et ici en particulier les sels de calcium et/ou d'aluminium - étant préférés.

14. Procédé selon les revendications 1 à 13,
caractérisé en ce qu'
on dépose les stabilisateurs mélangés avec la plus grande partie du liant à base d'ester de polyvinyle et/ou après une stabilisation préalable du sol avec l'imprégnation à base d'ester de polyvinyle.

15. Procédé selon les revendications 1 à 14,
caractérisé en ce qu'
on utilise également les stabilisateurs sous forme de préparation aqueuse, en particulier sous forme de dispersion et/ou émulsion aqueuse et on les introduit dans le sol.

16. Procédé selon les revendications 1 à 15,
caractérisé en ce qu'
au moins lors de l'utilisation de stabilisateurs qui se présentent comme solides dans un intervalle de température allant de 5 à 15°C, on utilise simultanément des adjuvants de fluidité organique qui sont de préférence miscibles avec les stabilisateurs et sont en particulier biocompatibles et dégradables, les composants correspondants à base d'alcools et/ou d'éthers et/ou d'esters d'acides carboxyliques pouvant être préférés.

17. Procédé selon les revendications 1 à 16,
caractérisé en ce que
les liants à base d'ester de polyvinyle et les stabilisateurs sont utilisés dans des rapports quantitatifs (valeurs anhydres) de 5:1 à 1:5, de préférence de 1:3 à 2:1.

18. Procédé selon les revendications 1 à 17,
caractérisé en ce qu'
on utilise des stabilisateurs ou selon les cas leurs mélanges avec des adjuvants filmogènes, dont la température minimum de formation de pellicule se situe dans un intervalle allant de 0 à 15°C.

19. Procédé selon les revendications 1 à 18,
caractérisé en ce que
les liants à base d'ester de polyvinyle et les stabilisateurs sont toujours introduits à des quantités d'au moins 50 g/m² de surface de sol, de préférence à des quantités d'au moins 100 g/m² de surface de sol et en particulier à des quantités de 150 à 250 g/m² de surface de sol.

20. Procédé selon les revendications 1 à 19,
caractérisé en ce que
pour l'introduction de la plus grande partie du liant et de préférence également des stabilisateurs éventuellement employés, on utilise des préparations aqueuses diluées dont la teneur en matière active considérée se situe à des concentrations inférieures à 50 % en poids, de préférence inférieures à 30 % et en particulier allant de 5 à 20 % en poids.

21. Procédé selon les revendications 1 à 20,
caractérisé en ce qu'
avant et/ou en même temps que les adjuvants de solidification du sol on introduit dans le sol des graines de plantes et/ou d'autres adjuvants pour favoriser la croissance des plantes, en particulier des engrais et/ou des agents de rétention de l'eau.
